# EUROPEAN PATENT APPLICATION

(11) **EP 4 317 093 A1**
(43) Date of publication of application: **07.02.2024**
(21) Application number: 21935271.3
(22) Date of filing: 01.04.2021
(51) Int. Cl.: C03C 3/066, C03C 3/089, C03C 3/097, C03C 12/00

(54) **NON-ELUTABLE ANTIMICROBIAL GLASS COMPOSITION, AND METHOD FOR PREPARING ANTIMICROBIAL GLASS POWDER USING SAME**

(71) Applicant: LG Electronics Inc., Yeongdeungpo-gu Seoul 07336 (KR)
(72) Inventor: KIM, Namjin, Seoul 08592 (KR); KIM, Daesung, Seoul 08592 (KR); KIM, Young Seok, Seoul 08592 (KR)
(74) Representative: Vossius & Partner Patentanwälte Rechtsanwälte mbB
(86) International application number: PCT/KR2021/004066
(87) International publication number: WO 2022/211156

(57) **Abstract**

Disclosed herein are a non-elutable antibacterial glass composition and a method for preparing an antibacterial glass power using same, wherein the non-elutable antibacterial glass composition contains ingredients harmless to the human body, and has high durability and high water resistance, and thus can maintain an antibacterial function semipermanently. In addition, the present invention relates to a novel silicate-based antimicrobial glass composition which contains SiO₂, which is a glass forming agent, as the main ingredient, and to which the addition of P₂O₅ was intentionally precluded.

## Description

### [Technical Field]

Disclosed herein are a non-elutable antimicrobial glass composition and a method for preparing an antimicrobial glass powder using the same.

### [Background Art]

Microorganisms such as germs, viruses and bacteria are found in a1l places, in particular, a washbasin, the shelves in a fridge or a washing machine that are used in our daily lives. If such microorganisms invade the human body, they can infect the human body and become a serious threat to human health.

Germs and viruses vary depending on environments. In particular, *Pseudomonas aeruginosa* thrives in a moist environment, and survives under *environmental* conditions with a *minimal nutrient* supply. Accordingly, *P. aeruginosa* is considered to be a ubiquitous bacterium. Additionally, the bacterium exists in humid environments, medical devices and even containers of disinfectant liquids in health care facilities, and causes formation of a biofilm.

Under the circumstances, there is a growing demand for an antimicrobial glass composition capable of preventing the spread of microorganisms to the furniture, medical tools, a container for disinfectant liquids and the like in a hospital as well as a household product such as a washbasin, the shelves in a refrigerator, an oven, a washing machine and the like.

In the related art, an antimicrobial glass composition includes molybdenum oxides, to increase the number of positive hydrogen ions that are generated from moisture and the molybdenum oxides. Accordingly, an acid environment is created in a water-soluble medium, and microorganisms are killed in the acid environment.

However, the antimicrobial glass composition including mono molybdenum oxides cannot ensure water resistance properly, and the acid environment needs to be created.

Further, a compound oxide in which molybdenum and silver, or molybdenum and copper are combined in an antimicrobial glass composition can be used to ensure sufficient water resistance.

However, in a case in which an antimicrobial glass composition includes compound oxides, a ratio of molybdenum decreases. Accordingly, an acid environment of a water-soluble medium can hardly be created, causing deterioration in an antimicrobial property.

(Patent document 1) KR Patent Publication No. 10-2016-0124193 (published on October 26, 2016.)

### [Description of Invention]

### [Technical Problems]

The objective of the present disclosure is to ensure non-elution based on an adjustment of each component and a composition ratio thereof, and semipermanent sustainability of an antimicrobial activity.

The objective of the present disclosure is to comprise components harmless to the human body, have high durability and water resistance, and maintain a semipermanent antimicrobial function.

The objective of the present disclosure is to ensure an antimicrobial activity that helps to effectively remove *Pseudomonas aeruginosa* (*P. aeruginosaas*) which inhabits in a humid environment where there is water.

Aspects according to the present disclosure are not limited to the above ones, and other aspects and advantages that are not mentioned above can be clearly understood from the following description and can be more clearly understood from the embodiments set forth herein. Additionally, understandably, the aspects and advantages in the present disclosure are embodied via means and combinations thereof that are described in the appended claims.

### [Technical Solutions]

A non-elutable antimicrobial glass composition according to the present disclosure, as a novel silicate-based glass composition, is highly durable and highly resistant against water, and maintains a semipermanent antimicrobial function.

In the non-elutable antimicrobial glass composition according to the present disclosure, an antimicrobial activity does not result from the decomposition of an antimicrobial agent. Rather, a metal ion having an antimicrobial property enables the surface of glass to have a positive charge and to attract germs that has a negative charge, such that the germs are prevented from growing, thereby ensuring a semipermanent antimicrobial activity.

Thus, in a case in which the non-elutable antimicrobial glass composition according to the present disclosure is used as an additive to a plastic injection mold, an excellent antimicrobial activity may be ensured against *Pseudomonas aeruginosa* (*P. aeruginosaas*) which inhabits in a humid environment where there is water, as well as *Escherichia coli* (*E. coli*) *and Staphylococcus aureus* (*S. aureus*)*,* such that the germs may be effectively removed.

The non-elutable antimicrobial glass composition according to the present disclosure comprises a total of 30 to 70 wt% of SiO₂ and B₂O₃, a total of 5 to 30 wt% of Na₂O and K₂O, a total of 20 to 50 wt% of ZnO, CaO and CeO₂, a total of 1 to 20 wt% of CuO and Fe₂O₃, and 0.1 to 2 wt% of one or more of Ag₃PO₄ and AgNO₃.

Herein, SiO₂ and B₂O₃ are not components that exhibit an antimicrobial activity directly, but need to be included at a composition ratio at which the formation of OH groups on the surface of glass is minimized.

To this end, content of B₂O₃ is less than content of SiO₂, preferably.

More preferably, B₂O₃ needs to be added at 25 wt% or less, and SiO₂ needs to be added at 30 to 60 wt%.

### [Advantageous Effects]

According to the present disclosure, provided are a non-elutable antimicrobial glass composition and a method for preparing an antimicrobial glass powder using the same that comprises components harmless to the human body, has high durability and water resistance, and maintains a semipermanent antimicrobial function.

Additionally, in the non-elutable antimicrobial glass composition, SiO₂ that is a glass forming agent is added as a main component, and metal ions such as ZnO, CaO, CuO, Fe₂O₃, Ag₃PO₄, AgNO₃ and the like having an antimicrobial property and being included in glass makes the electric charge (zeta potential) of the surface of glass positive, such that the surface of the glass attracts germs that ordinarily has a negative charge, and creates a charge atmosphere where germs cannot grow, to kill the germs.

Thus, in a case in which the non-elutable antimicrobial glass composition according to the present disclosure is used as an additive to a plastic injection mold, an excellent antimicrobial activity may be ensured against *Pseudomonas aeruginosa* (*P. aeruginosaas*) which inhabits in a humid environment where there is water, as well as *Escherichia coli* (*E. coli*) *and Staphylococcus aureus* (*S. aureus*)*,* such that the germs may be effectively removed.

Specific effects are described along with the above-described effects in the section of detailed description.

### [Brief Description of Drawings]

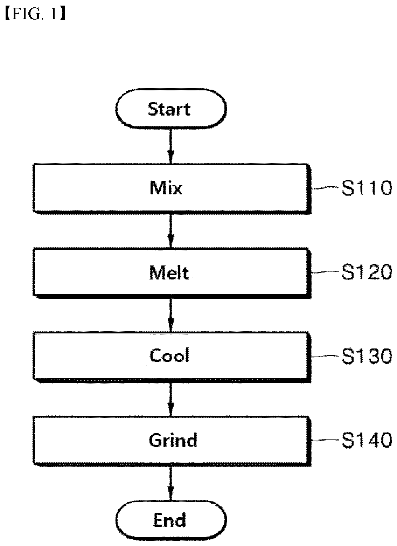

FIG. 1 is a processing flow chart showing a method for preparing a non-elutable antimicrobial glass powder in an embodiment of the present disclosure.

### [Detailed Description of Exemplary Embodiments]

Aspects, features, and advantages are specifically described hereinafter with reference to the accompanying drawings such that one having ordinary skill in the art to which embodiments pertain can embody the technical spirit easily. Hereinafter, *description* of known technologies in relation to the subject matter is omitted if it is deemed to *make* the *gist* unnecessarily *vague.* Hereinafter, the embodiments are specifically described with reference to the accompanying drawings. In the drawings, identical reference numerals can denote identical or similar components.

The singular forms "a", "an" and "the" are intended to include the plural forms as well, unless explicitly indicated otherwise. It is to be further understood that the terms "comprise" or "include" and the like, set forth herein, are not interpreted as necessarily including all the stated components or steps but can be interpreted as excluding some of the stated components or steps or can be interpreted as including additional components or steps.

Hereinafter, a non-elutable antimicrobial glass composition and a method for preparing an antimicrobial glass powder using the same are described with reference to several embodiments.

The non-elutable antimicrobial glass composition in the embodiments exhibits a non-elution property, based on an adjustment of each component and a composition ratio thereof, thereby ensuring a semipermanent antimicrobial activity.

Additionally, the non-elutable antimicrobial glass composition in the embodiments is comprised of components that are harmless to the human body, and exhibits high durability and high water resistance, thereby ensuring a semi permanent antimicrobial activity.

Further, in the mechanism of a non-elutable antimicrobial glass composition according to the embodiments, an antimicrobial activity does not result from the decomposition of an antimicrobial agent. Rather, a metal ion having an antimicrobial property enables the surface of glass to have a positive charge and to attract germs that have a negative charge, such that the germs are prevented from growing, thereby ensuring a semipermanent antimicrobial activity.

Thus, in a case in which the non-elutable antimicrobial glass composition according to the present disclosure is used as an additive to a plastic injection mold, an excellent antimicrobial activity may be ensured against *Pseudomonas aeruginosa* (*P. aeruginosaas*) which inhabits in a humid environment where there is water, as well as *Escherichia coli* (*E. coli*) *and Staphylococcus aureus* (*S. aureus*)*,* such that the germs may be effectively removed.

To this end, the non-elutable antimicrobial glass composition according to the present disclosure comprises a total of 30 to 70 wt% of SiO₂ and B₂O₃, a total of 5 to 30 wt% of Na₂O and K₂O, a total of 20 to 50 wt% of ZnO, CaO and CeO₂, a total of 1 to 20 wt% of CuO and Fe₂O₃,and 0.1 to 2 wt% of one or more of Ag₃PO₄ and AgNO₃.

Herein, SiO₂ and B₂O₃ are not components that exhibit an antimicrobial activity directly, but need to be included at a composition ratio at which the formation of an OH group on the surface of glass is minimized.

To this end, B₂O₃ is added less than SiO₂, preferably.

More preferably, 25 wt% or less of B₂O₃ needs to be added, and 30 to 60 wt% of SiO₂ needs to be added.

That is, according to the present disclosure, a glass forming agent is necessarily included to form glass. Further, a modifier for melting a glass forming agent in a uniform-quality and amorphous form is included to embody glass readily, under conditions of melting glass (about 900 to 1600 °C).

As a typical glass forming agent, SiO₂, B₂O₃ and P₂O₅ are widely used in a commercial area. In the case of glass comprised of a large amount of B₂O₃ and P₂O₅, a large amount of OH groups derived from moisture in the air is absorbed to the surface of glass, because of high hygroscopicity, and the surface of the glass has a negative charge. As a result, B₂O₃ and P₂O₅ act as a factor for causing deterioration in the antimicrobial activity of the glass.

To prevent this from happening, in the present disclosure, P₂O₅ is not added intentionally, and a novel silicate-based antimicrobial glass composition mainly comprised of SiO₂ as a glass forming agent is devised.

Further, the subject matter of the present disclosure comprises a metal ion such as ZnO, CaO, CuO, Fe₂O₃, Ag₃PO₄, AgNO₃, and the like exhibiting an antimicrobial property. Components such as ZnO, CaO, CuO, Fe₂O₃, Ag₃PO₄, AgNO₃ and the like exhibit an antimicrobial activity, and helps a glass forming agent to solidify the structure of glass, ensuring the durability of the glass.

As described above, SiO₂ as a glass forming agent is added as a main component to the non-elutable antimicrobial glass composition in the embodiment, and metal ions such as ZnO, CaO, CuO, Fe₂O₃, Ag₃PO₄, AgNO₃ and the like having an antimicrobial property and being included in glass, make the electric charge (a zeta potential) of the surface of the glass positive, such that the surface of the glass attracts germs that ordinarily has a negative charge, and create a charge atmosphere where germs cannot grow to kill the germs.

Hereinafter, the role and content of each component of the non-elutable antimicrobial glass composition in the embodiment are described specifically.

As a glass forming agent, SiO₂ and B₂O₃ enable vitrification, and are essential components that serve as a structure skeleton of glass. Further, SiO₂ does not act as a component that exhibits an antimicrobial activity directly, but forms less OH groups on the surface of glass than P₂O₅ that is a typical glass forming agent, and metal ions in the glass helps the surface of the glass to have a positive charge.

Preferably, SiO₂ and B₂O₃ are included at a total content ratio of 30 to 70 wt%, with respect to the entire weight of the antimicrobial glass composition according to the present disclosure, and more preferably, at a total content of 40 to 55 wt%. In a case in which SiO₂ and B₂O₃ are included at a total content of greater than 70 wt%, workability and a yield decrease in a cooling process, as viscosity increases at a time when glass is melted. In a case in which SiO₂ and B₂O₃ are included at a total content of less than 30 wt%, the structure of glass is weakened, and water resistance decreases.

Further, in the case of glass comprised of a large amount of B₂O₃ and P₂O₅, a large amount of OH groups derived from moisture in the air is absorbed to the surface of glass, because of high hygroscopicity, and the surface of the glass has a negative charge. As a result, B₂O₃ and P₂O₅ act as a factor for causing deterioration in the antimicrobial activity of the glass. To prevent this from happening, in the present disclosure, P₂O₅ is not added intentionally, and a novel silicate-based antimicrobial glass composition mainly comprised of SiO₂ as a glass forming agent is devised.

That is, SiO₂ helps to strengthen the structure of glass, but in a case in which as a single component, SiO₂ plays a role of a glass forming agent, viscosity becomes excessively high at a time of melting. To manufacture uniform-quality glass, a very high melting temperature is required. Accordingly, B₂O₃ is added to such a degree that the water resistance of glass does not deteriorate, to pull down the viscosity of a melted material and improve workability and a yield in manufacturing of glass.

That is, SiO₂ and B₂O₃ are not components that exhibit an antimicrobial activity directly, but need to be included at a composition ratio at which the formation of OH groups on the surface of glass is minimized.

In a case in which greater than 25 wt% of B₂O₃ is included, the water resistance of glass decreases, and the glass/B₂O₃ is readily extracted in water, and in a case where content of B₂O₃ is greater than content of SiO₂, OH groups are formed on the surface of glass easily in the atmosphere.

In the present disclosure, SiO₂ content is greater than B₂O₃ content, preferably, to ensure water resistance readily and minimize the formation of OH groups on the surface of glass.

To this end, 25 wt% of B₂O₃ is added with respect to the entire weight of the antimicrobial glass composition in the present disclosure, and 30 to 60 wt% of SiO₂ is added with respect to the entire weight of the antimicrobial glass composition in the present disclosure, preferably.

An alkali oxide such as Na₂O and K₂O serves as a network modifier that is non-crosslinked in a glass composition. The components do not enable vitrification solely, but in a case in which the components are mixed with a glass formed such as SiO₂, B₂O₃ and the like at a certain ratio, the components enable vitrification. In a case in which one of the components is only included in a glass composition, the durability of glass may be weakened in an area where vitrificaiton is possible. However, in a case in which two components are included together in a glass composition, the durability of glass may improve depending on a ratio of the components. This phenomenon is referred to as a mixed alkali effect.

Preferably, Na₂O and K₂O are included at a total content ratio of 5 to 30 wt%, with respect to the entire weight of the antimicrobial glass composition in the present disclosure, and more preferably, at a total content ratio of 13 to 21 wt%. In a case in which a total of greater than 30 wt% of Na₂O and K₂O is added, the thermo physical properties of a glass composition may deteriorate. In a case in which a total of less than 5 wt% of Na₂O and K₂O is added, the valence of a component such as ZnO is hardly controlled, causing deterioration in the antimicrobial property of the glass composition.

Components including ZnO, CaO and CeO₂ serve as a network modifier as well as a network former from a structural perspective of glass. Additionally, ZnO, CaO and CeO₂ are one of the important components exhibiting the antimicrobial property of a glass composition.

Preferably, ZnO, CaO and CeO₂ are added at a total content ratio of 20 to 50 wt%, with respect to the entire weight of the antimicrobial glass composition in the present disclosure. In a case in which a total of less than 20 wt% of ZnO, CaO and CeO₂ is added, a glass composition hardly exhibits an antimicrobial property. In a case in which a total of greater than 50 wt% of ZnO, CaO and CeO₂ is added, the durability or thermo physical property of a glass composition may deteriorate.

The three components described above are not enough to ensure an antimicrobial activity (coverage of a variety of germs). That is, ZnO, CaO and CeO₂ do not show high toxicity against germs. In a case in which a total of greater than 50 wt% of ZnO, CaO and CeO₂ is included, or greater than 30 wt% of any one of ZnO, CaO and CeO₂ is included, ZnO, CaO and CeO₂ is outside a vitrification area.

The content of ZnO, CaO and CeO₂ needs to be respectively controlled to 30 wt% or less with respect to the entire weight of the antimicrobial glass composition in the present disclosure, to embody uniform glass. To this end, 10 to 20 wt% of ZnO is added, 5 to 20 wt% of CaO is added, and 0.1 to 5 wt% of CeO₂ is added, preferably.

Additionally, CuO and Fe₂O₃ help glass itself to produce an antimicrobial effect.

Preferably, CuO and Fe₂O₃ are added at a total content ratio of 1 to 20 wt%, with respect to the entire weight of the antimicrobial glass composition in the present disclosure. In a case in which a total of less than 1 wt% of CuO and Fe₂O₃ is added, the antimicrobial activity of glass may deteriorate. In a case in which a total of greater than 20 wt% of CuO and Fe₂O₃ is added, the durability of glass may deteriorate.

In a case in which less than 3 wt% of CuO is added, an antimicrobial property is not shown properly. To ensure an antimicrobial property, CuO needs to be included preferably at a content ratio of 3 wt% or greater, and more preferably, at a content ratio of 3 to 10 wt%, with respect to the entire weight of the antimicrobial glass composition.

Further, Ag₃PO₄ and AgNO₃ are present in an ion state, in glass, and are factors that exhibit an antimicrobial activity effectively. In particular, Ag₃PO₄ and AgNO₃ are excellent in improving an antimicrobial activity against *Pseudomonas aeruginosa* (*P. aeruginosa*)*.*

Preferably, one or more of Ag₃PO₄ and AgNO₃ are added at a content ratio of 0.1 to 2 wt%, with respect to the entire weight of the antimicrobial glass composition in the present disclosure. In a case in which less than 0.1 wt% of one or more of Ag₃PO₄ and AgNO₃ is added, improvement in the antimicrobial property of glass is not properly ensured. In a case in which greater than 2 wt% of one or more of Ag₃PO₄ and AgNO₃ is added, vitrification may be unstabilized due to the precipitation of silver metal.

Hereinafter, a method for preparing a non-elutable antimicrobial glass powder in an embodiment is described with reference to the accompanying drawings.

FIG. 1 is a processing flow chart showing a method for preparing a non-elutable antimicrobial glass powder in an embodiment of the present disclosure.

As illustrated in FIG. 1, the method for preparing a non-elutable antimicrobial glass powder in the embodiment comprises a mixing step (S1 10), a melting step (S120), a cooling step (S130) and a grinding step (S140).

### Mixing

In the mixing step (S 1 10), a total of 30 to 70 wt% of SiO₂ and B₂O₃, a total of 5 to 30 wt% of Na₂O and K₂O, a total of 20 to 50 wt% of ZnO, CaO and CeO₂, a total of 1 to 20 wt% of CuO and Fe₂O₃,and 0.1 to 2 wt% of one or more of Ag₃PO₄ and AgNO₃ are mixed and stirred, to form an antimicrobial glass composition.

Herein, the content of B₂O₃ is less than the content of SiO₂.

Preferably, 25 wt% or less of B₂O₃ is added, and 30 to 60 wt% of SiO₂ is added.

Additionally, Na₂O and K₂O are respectively added at 20 wt% or less, preferably.

Further, ZnO is added at 10 to 20 wt%, CaO is added at 5 to 20 wt%, and CeO₂ is added at 0.1 to 5 wt%, preferably.

Further, CuO is added at 3 to 10 wt%, preferably.

### Melting

In the melting step (S120), the antimicrobial glass composition is melted.

In this step, the melting procedure is performed at 1,200 to 1,300 °C for 1 to 60 minutes, preferably. In a case in which a melting temperature is less than 1,200 °C, or melting time is less than 1 minute, the antimicrobial glass composition is not completely melted, and the unmixing of the melted glass occurs. In a case in which a melting temperature is greater than 1,300 °C, or melting time is greater than 60 seconds, excessive energy and time are required, causing economic inefficiency.

### Cooling

In the cooling step (S130), the antimicrobial glass composition melted is cooled up to room temperature.

In this step, the cooling procedure is performed based on cooling in furnace, preferably. In a case in which air cooling or water cooling is applied, the internal stress of the antimicrobial glass is caused severely. In some cases, the antimicrobial glass may have a crack. Accordingly, the cooling procedure is performed based on cooling in furnace, preferably.

### Grinding

In the grinding step (S140), the antimicrobial glass cooled is ground. The grinding procedure is performed with a dry grinder, preferably.

In the grinding procedure, the antimicrobial glass is ground finely to manufacture an antimicrobial glass powder. The antimicrobial glass powder has an average diameter of 30 µm or less, preferably, and more preferably, an average diameter of 15 to 25 µm.

In the above steps (S110 ~ S140), the non-elutable antimicrobial glass powder in the embodiment may be prepared.

### Embodiments

Hereinafter, the configuration and operation of the subject matter of the present disclosure are described with reference to preferred embodiments. However, the embodiments are provided as preferred examples, and are not intended to limit the subject matter of the present disclosure.

Particulars that are technically inferred by one skilled in the art are not described herein.

### 1. Preparation of antimicrobial glass powder

### Embodiment 1

An antimicrobial glass composition of composition listed in table 1 was melted at 1,250 °C in an electric furnace, and then cooled on a stainless steel plate, in a glass bulk form, based on air cooling, to obtain an antimicrobial glass having a cullet shape. Then the antimictobial glass was ground in a dry grinder (ball mill), and then passed through a 400 mesh sieve, to manufacture an antimicrobial glass powder having a D90 average particle size of 20 µm,

Herein, Na₂CO₃, K₂CO₃, CaCO₃ were respectively used as a raw material for Na₂O, K₂O, CaO, and except for the components, the remaining components are listed in table 1.

### Embodiment 2

An antimicrobial glass powder having a D90 average particle size of 17 µm was manufactured, in the same way that the antimicrobial glass powder in embodiment 1 was manufactured, except that an antimicrobial glass composition having composition listed in table 1 was melted at 1,260 °C in an electric furnace.

### Embodiment 3

An antimicrobial glass powder having a D90 average particle size of 18 µm was manufactured, in the same way that the antimicrobial glass powder in embodiment 1 was manufactured, except that an antimicrobial glass composition having composition listed in table 1 was melted at 1,240 °C in an electric furnace.

### Comparative example 1

An antimicrobial glass powder having a D90 average particle size of 21 µm was manufactured, in the same way that the antimicrobial glass powder in embodiment 1 was manufactured, except that an antimicrobial glass composition having composition listed in table 1 was melted at 1,260°C in an electric furnace.

**[Table 1] (Unit: wt%)**

| **Category** | **Embodiment 1** | **Embodiment 2** | **Embodiment 3** | **Comparative example 1** |
|---|---|---|---|---|
| **SiO₂** | **36.1** | **35.0** | **39.1** | **30.5** |
| **B₂O₃** | **6.8** | **6.8** | **7.7** | **23.5** |
| **Na₂O** | **10.6** | **9.7** | **11.2** | **12.9** |
| **K₂O** | **5.7** | **5.8** | **6.4** | **7.1** |
| **ZnO** | **18.5** | **19.5** | **14.9** | **22.3** |
| **CaO** | **9.6** | **8.3** | **13.5** | **3.7** |
| **CeO₂** | **1.1** | **1.5** | **0.9** | **-** |
| **AgNO₃** | **0.1** | **0.05** | **-** | **-** |
| **Ag₃PO₄** | **0.1** | **0.1** | **0.3** | **-** |
| **CuO** | **8.1** | **6.8** | **5.5** | **-** |
| **Fe₂O₃** | **3.3** | **6.45** | **0.5** | **-** |
| **Total** | **100** | **100** | **100** | **100** |

### 2. Measurement of antimicrobial level

Table 2 shows results of the measurement of antimicrobial levels of the antimicrobial glass powders that were prepared in embodiments 1 to 3 and comparative example 1. To check the antimicrobial level of each antimicrobial glass powder, an antimicrobial activity value was measured against *Staphylococcus aureus (S. aureus) and Escherichia coli (E. coli)* was measured based on the ASTM E2149-13a shake flask test method. Additionally, the antimicrobial activity of each antimicrobial glass powder was additionally measured against *pneumococcus* and *Pseudomonas aeruginosa* (*P. aeruginosa*)*.*

**[Table 2]**

| **Category** | | **Embodi ment 1** | **Embodi ment 2** | **Embodi ment 3** | **Comparati ve example 1** |
|---|---|---|---|---|---|
| **pH (soaked at room-temperature water for 32 hours and then evaluated, initial value 7.5)** | | **7.51** | **7.56** | **7.49** | **7.70** |
| **Antimicrobial level (ASTM E2149-13a, shake flask test)** | **Staphylococcus aureus** | **99.9 %** | **99.9 %** | **99.9 %** | **40.0 %** |
| | **Escherichia coil** | **99.9 %** | **99.9 %** | **99.9 %** | **42.9 %** |
| | **Klebsiella pneumoniae** | **99.9 %** | **99.9 %** | **99.9 %** | **73.8 %** |
| | **Pseudomonas aeruginosa** | **99.9 %** | **99.9 %** | **99.9 %** | **91.2 %** |

Table 1 and table 2 show that the antimicrobial levels of the antimicrobial glass powders in embodiments 1 to 3 are 99 % or greater. Additionally, the PH value of the antimicrobial glass powders in embodiments 1 to 3 after a 32-hour soak in room-temperature water is almost similar to the initial value.

However, the antimicrobial level of the antimicrobial glass powder in comparative example 1 is about 95.0 % or less. Additionally, the PH value of the antimicrobial glass powder in comparative example 1 after a 32-hour soak in room-temperature water is 7.70, and considerably differs from the initial value.

### 3. Manufacturing of injection mold

### Embodiment 4

To manufacture an injection mold, 3 wt% of the antimicrobial glass powder in embodiment 1 and 97 wt% of polypropylene (PP) resin were mixed and then injection-molded with an injection molding device, to manufacture an injection mold of 200 mm (width), 100 mm (length) and 3 mm (thickness).

### Comparative example 2

To manufacture an injection mold, 3 wt% of the antimicrobial glass powder in comparative example 1 and 97 wt% of polypropylene (PP) resin were mixed and then injection-molded with an injection molding device, to manufacture an injection mold of 200 mm (width), 100 mm (length) and 3 mm (thickness).

### Comparative example 3

A polypropylene (PP) resin was only inject-molded with an injection molding device, to manufacture an injection mold of 200 mm (width), 100 mm (length) and 3 mm (thickness), without adding the antimicrobial glass powder.

### 4. Measurement of antimicrobial activity

Table 3 shows results of the measurement of antimicrobial activities of the injection molds in embodiment 4 and comparative examples 2 and 3. To check the antimicrobial activity value of each injection mold, the antimicrobial activity of each injection mold was measured against *Staphylococcus aureus* (*S. aureus*) *and Escherichia coli* (*E. coli*)*,* based on the JIS Z 2801 film attachment method as a standard antimicrobial activity test method. Additionally, the antimicrobial activity of each injection mold was additionally measured against *pneumococcus* and *Pseudomonas aeruginosa* (*P. aeruginosa*)*.*

Herein, the antimicrobial activity value was measured based on the following conversion method.

| Antimicrobial activity value | Antimicrobial activity |
|---|---|
| 2.0 or above | 99.0% |
| 3.0 or above | 99.9% |
| 4.0 or above | 99.99% |

**[Table 3]**

| **Category** | | **Embodime nt 4** | **Comparati ve example 2** | **Comparati ve example 3** |
|---|---|---|---|---|
| **Antimicrobial activity (JIS Z 2801, film attachment method)** | **Staphylococcus aureus** | **99.99 %** | **99.0 %** | **92.5%** |
| | **Escherichia coil** | **99.99 %** | **99.0 %** | **91.2%** |
| | **Klebsiella pneumoniae** | **99.99 %** | **97.3 %** | **91.3%** |
| | **Pseudomonas aeruginosa** | **99.99 %** | **96.7 %** | **92.7%** |

Table 3 shows that the antimicrobial activity value and antimicrobial activity of the injection mold in embodiment 4 is 4.0 and 99.99 % respectively.

However, the antimicrobial activity value and antimicrobial activity of the injection molds in comparative examples 2 and 3 are less than 2.0 and less than 99% respectively.

Based on the experimental results, the injection mold in embodiment 4 shows an antimicrobial activity that is more excellent than that of the injection molds in comparative examples 2 and 3.

The embodiments are described above with reference to a number of illustrative embodiments thereof. However, embodiments are not limited to the embodiments and drawings set forth herein, and numerous other modifications and embodiments can be drawn by one skilled in the art within the technical scope of the disclosure. Further, the effects and predictable effects based on the configurations in the disclosure are to be included within the range of the disclosure.

## Claims

1. A non-elutable antimicrobial glass composition, comprising:
a total of 30 to 70 wt% of SiO₂ and B₂O₃;
a total of 5 to 30 wt% of Na₂O and K₂O;
a total of 20 to 50 wt% of ZnO, CaO and CeO₂;
a total of 1 to 20 wt% of CuO and Fe₂O₃; and
0.1 to 2 wt% of one or more of Ag₃PO₄ and AgNO₃.

2. The non-elutable antimicrobial glass composition of claim 1, wherein the content of the component B₂O₃ is less than the content of the component SiO₂.

3. The non-elutable antimicrobial glass composition of claim 2, wherein the component B₂O₃ is added at 25 wt% or less.

4. The non-elutable antimicrobial glass composition of claim 2, wherein the component SiO₂ is added at 30 to 60 wt%.

5. The non-elutable antimicrobial glass composition of claim 1, wherein each of the component Na₂O and the component K₂O are added at 20 wt% or less.

6. The non-elutable antimicrobial glass composition of claim 1, wherein the component ZnO is added at 10 to 20 wt%,
the component CaO is added at 5 to 20 wt%, and
the component CeO₂ is added at 0.1 to 5 wt%.

7. The non-elutable antimicrobial glass composition of claim 1, wherein the component CuO is added at 3 to 10 wt%.

8. A method for preparing a non-elutable antimicrobial glass powder, comprising:
mixing and stirring a total of 30 to 70 wt% of SiO₂ and B₂O₃, a total of 5 to 30 wt% of Na₂O and K₂O, a total of 20 to 50 wt% of ZnO, CaO and CeO₂, a total of 1 to 20 wt% of CuO and Fe₂O₃, and 0.1 to 2 wt% of one or more of Ag₃PO₄ and AgNO₃, and forming an antimicrobial glass composition;
melting the antimicrobial glass composition;
cooling the antimicrobial glass composition melted; and
grinding the antimicrobial glass cooled.

9. The method of claim 8, wherein the content of the component B₂O₃ is less than the content of the component SiO₂.

10. The method of claim 9, wherein the component B₂O₃ is added at 25 wt% or less.

11. The method of claim 9, wherein the component SiO₂ is added at 30 to 60 wt%.

12. The method of claim 8, wherein each of the component Na₂O and the component K₂O are added at 20 wt% or less.

13. The method of claim 8, wherein the component ZnO is added at 10 to 20 wt%,
the component CaO is added at 5 to 20 wt%, and
the component CeO₂ is added at 0.1 to 5 wt%.

14. The method of claim 8, wherein the component CuO is added at 3 to 10 wt%.
